Europäisches Patentamt

European Patent Office

Office européen des brevets

(11) Veröffentlichungsnummer: **0 098 489**
A1

(12) **EUROPÄISCHE PATENTANMELDUNG**

(21) Anmeldenummer: 83106208.8

(22) Anmeldetag: 25.06.83

(51) Int. Cl.³: **F 27 D 7/02**, F 27 D 17/00,
F 23 L 17/16

(30) Priorität: 01.07.82 DE 3224571

(43) Veröffentlichungstag der Anmeldung: 18.01.84
Patentblatt 84/3

(84) Benannte Vertragsstaaten: **AT BE FR GB IT SE**

(71) Anmelder: **Ruhrgas Aktiengesellschaft,
Huttropstrasse 60 Postfach 10 32 52,
D-4300 Essen 1 (DE)**

(72) Erfinder: **Kühn, Friedhelm, Dr., Fichtestrasse 108,
D-4330 Mülheim/Ruhr (DE)**

(54) **Verfahren zum Betreiben eines Industrieofens.**

(57) Offenbart wird ein Verfahren zum Betreiben eines Industrieofens, der von Rekuperatorbrennern beheizt wird, wobei deren Abgase über Dampfstrahlinjektoren abgezogen werden. Das aus den Dampfstrahlinjektoren austretende Abgas-Dampf-Gemisch gelangt in einen Abhitzekessel zur Erzeugung von Wasserdampf. Dieser Wasserdampf wird den Dampfstrahlinjektoren zu deren Antrieb zugeführt.

Wenn Wasserdampf im Überschuß anfällt, kann eine Vorentspannung in einer Turbine zur Erzeugung von Nutzenergie durchgeführt werden. Solche Verhältnisse sind insbesondere dann gegeben, wenn der Industrieofen mit einer dampferzeugenden Wasserkühlung für seine heißgehenden Teile arbeitet. Der dabei entstehende Wasserdampf wird dann ebenfalls durch den Abhitzekessel geleitet. Die in der Turbine anfallende Nutzenergie kann zum Antrieb des Gebläses für die Verbrennungsluft der Rekuperatorbrenner dienen.

0098489

Ruhrgas Aktiengesellschaft
Essen

25.06.1982
tatp hs-ck 217

Verfahren zum Betreiben
eines Industrieofens

Die Erfindung betrifft ein Verfahren zum Betreiben eines Industrieofens, der von Rekuperatorbrennern beheizt wird, deren Abgase über Injektoren abgezogen werden.

Bei derartigen Verfahren ist man bemüht, Rekuperatorbrenner kompakter Bauart einzusetzen, die einen hohen Druckverlust bewirken und damit einen hohen feuerungstechnischen Wirkungsgrad zulassen. Die die Abgase abziehenden Injektoren dienen dazu, diesen hohen Druckverlust zu überwinden.

Bisher hat man mit Luftstrahlinjektoren gearbeitet, deren Wirksamtkeit jedoch begrenzt ist, ganz abgesehen davon, daß zusätzliche Energie für die Erzeugung der Injektorluft erforderlich wird.

Der Erfindung liegt die Aufgabe zugrunde, das eingangs genannte Verfahren derart zu verbessern, daß sich bei Senkung der erforderlichen Energiekosten der feuerungstechnische Wirkungsgrad erhöht.

Zur Lösung dieser Aufgabe ist das Verfahren nach der Erfindung dadurch gekennzeichnet, daß die Abgase der Rekuperatorbrenner über Dampfstrahlinjektoren abgezogen werden und daß das aus den Dampfstrahlinjektoren austretende Abgas-Dampf-Gemisch einem Abhitzekessel zur Erzeugung von Wasserdampf zugeführt wird, wobei der im Abhitzekessel erzeugte Wasserdampf zum Antrieb der Dampfstrahlinjektoren dient.

0098489

Die Dampfstrahlinjektoren sind in der Lage, ohne das Erfordernis eines zusätzlichen Gebläses einen extrem hohen Druckverlust der Rekuperatorbrenner zu überwinden. Letztere können also besonders kompakt ausgebildet werden und mit einem entsprechend hohen feuerungstechnischen Wirkungsgrad arbeiten. Zusätzliche Energie wird nicht benötigt. Vielmehr wird die Abwärme des Industrieofens genutzt.

Besonders günstige Verhältnisse ergeben sich dadurch, daß das aus dem Abhitzekessel austretende Abgas-Dampf-Gemisch durch einen Kondensatabscheider geleitet und dort vom zufließenden Frischwasser gekühlt wird. Die Rekuperatorbrenner nutzen den unteren Heizwert des Heizgases aus, während die Kondensationswärme im Kondensatabscheider zurückgewonnen und an das Frischwasser abgegeben wird. Das Kondensat kann außerdem dem Frischwasser zugemischt werden, so daß auch hier noch ein Wärmerückgewinn möglich ist.

Nach einem weiteren besonders vorteilhaften Merkmal der Erfindung wird bei Anwendung einer dampferzeugenden Wasserkühlung für heißgehende Teile des Industrieofens der durch die Wasserkühlung entstehende Dampf ebenfalls in den Abhitzekessel geleitet. Auf diese Weise läßt sich der in den Rekuperatorbrennern zu überwindende Druckverlust und damit deren feuerungstechnischer Wirkungsgrad weiter steigern.

Außerdem besteht unter diesen Voraussetzungen die Möglichkeit, daß die dem Abhitzekessel zugeführte Energie den Bedarf der Dampfstrahlinjektoren übersteigt. Für diesen Fall schlägt die Erfindung vor, daß der im Abhitzekessel erzeugte Wasserdampf in einer Turbine entspannt wird, bevor er zum Antrieb der Dampfstrahlinjektoren dient. Das Verfahren liefert also aus der Abwärme des Industrieofens zusätzliche Energie, die anderweitig genutzt werden kann.

Vorzugsweise treibt die Dampfturbine einen Generator an, der den Strom für ein die Rekuperatorbrenner beaufschlagendes Gebläse liefert. In der Regel ist ein solches Gebläse erforderlich, um die Primärluft für die Rekuperatorbrenner zu erzeugen. Der Energiebedarf dieses Gebläses, der bisher aus einer gesonderten Quelle gedeckt wurde, wird nun der Abwärme des Industrieofens entnommen.

Um schon bei der Inbetriebnahme des Industrieofens die Vorteile der Erfindung nutzen zu können, wird der Abhitzekessel während der Anfahrphase des Industrieofens durch eine Zusatzheizung beheizt. Diese Zusatzheizunng verbraucht zwar externe Energie, jedoch ist die andererseits erzielte Energieersparnis höher.

Die Erfindung wird im folgenden anhand bevorzugter Ausführungsbeispiele im Zusammenhang mit der beiliegenden Zeichnung näher erläutert. Die Zeichnung zeigt in

Fig. 1 ein erstes Ausführungsbeispiel;

Fig. 2 ein zweites Ausführungsbeispiel.

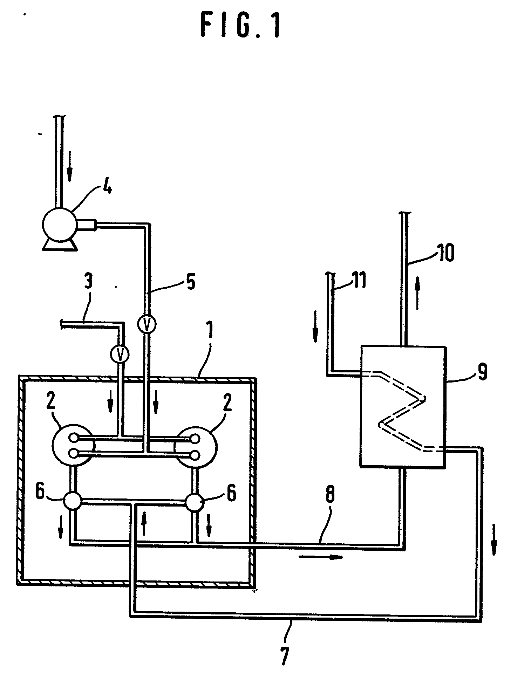

Nach Fig. 1 ist ein Industrieofen 1 vorgesehen, der von Rekuperatorbrennern 2 beheizt wird. Letztere werden über eine Leitung 3 mit Gas versorgt. Ferner ist ein Gebläse 4 vorgesehen, welches über eine Leitung 5 Primärluft an die Rekuperatorbrenner 2 liefert.

Die Abgase der Rekuperatorbrenner 2 werden durch Dampfstrahlinjektoren 6 abgezogen, denen Wasserdampf durch eine Leitung 7 zugeführt wird. Das aus den Dampfstrahlinjektoren kommende Abgas-Dampf-Gemisch gelangt durch eine Leitung 8 zu einem Abhitzekessel 9 und von dort durch eine Leitung 10 zu einem nicht dargestellten Abgaskamin. Der Abhitzekessel 9 dient dazu, das über eine Leitung 11 zuströmende Frischwasser als Wasserdampf in die Leitung 7 zur Versorgung der Dampfstrahlinjektoren 6 abzugeben.

- 4 -                    0098489

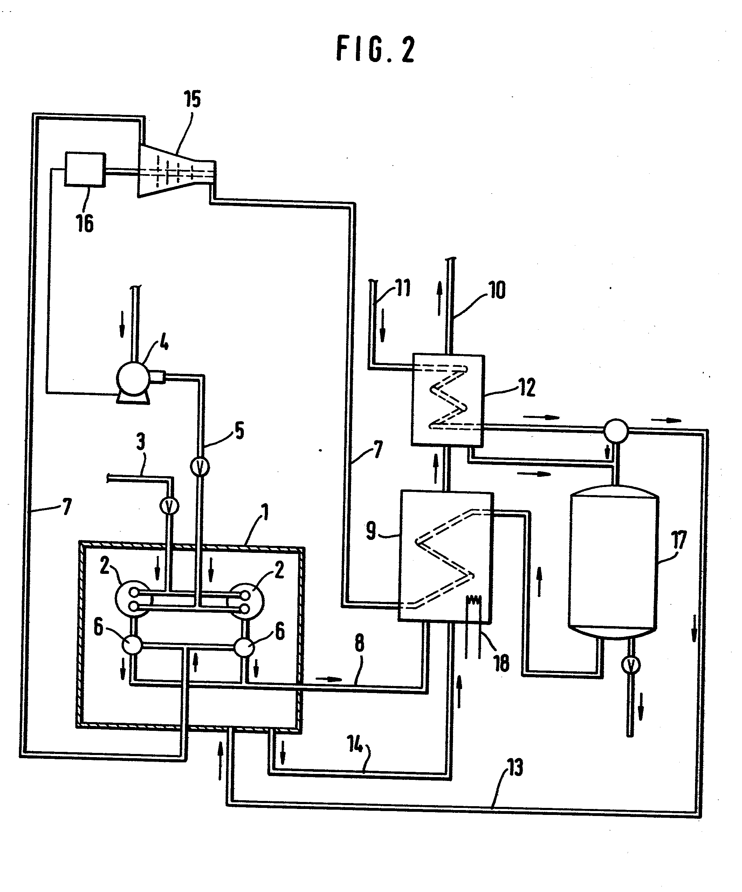

Die Ausführungsform nach Fig. 2 unterscheidet sich von der nach Fig. 1 vor allen Dingen dadurch, daß der Industrieofen 1 mit einer dampferzeugenden Wasserkühlung für heißgehende Teile versehen ist.

Das durch die Leitung 11 zuströmende Frischwasser wird durch einen dem Abhitzekessel 9 nachgeschalteten Kondensatabscheider 12 geführt und gelangt sodann durch eine Leitung 13 in den Industrieofen 1. Der bei der Wasserkühlung entstehende Dampf wird durch eine Leitung 14 in den Abhitzekessel 9 geführt.

Es bestünde nun die Möglichkeit, die auf diese Weise erhöhte Energiemenge durch die Leitung 7 aus dem Abhitzekessel 9 direkt den Dampfstrahlinjektoren 6 zuzuführen.

Im vorliegenden Fall wird jedoch im Abhitzekessel 9 soviel Wasserdampf erzeugt, daß die Leitung 7 vorher zu einer Turbine 15 führen kann, in der der Wasserdampf zur Erzeugung zusätzlicher Nutzenergie entspannt wird. Die Turbine 15 ist an einen Generator 16 angeschlossen, der den Strom für das Gebläse 4 liefert.

Fig. 2 zeigt ferner einen Speicher 17, in den sowohl Frischwasser aus dem Kondensatabscheider 12, als auch das aus letzterem stammende Kondensat gelangt. Der Speicher 17 beschickt die durch den Abhitzekessel 9 führende Rohrschlange.

Der Abhitzekessel 9 ist ferner mit einer Zusatzheizung 18 versehen, die während des Anfahrens des Industrieofens 1 solange eingeschaltet bleibt, bis letzterer über die Leitungen 8 und 14 eine ausreichende Menge an Abwärme liefert.

0098489

Ruhrgas Aktiengesellschaft          25.06.1982

Essen                               tatp hs-ck 217b


Verfahren zum Betreiben
eines Industrieofens


Patentansprüche


1.  Verfahren zum Betreiben eines Industrieofens, der von Rekuperatorbrennern beheizt wird, deren Abgase über Injektoren abgezogen werden, dadurch gekennzeichnet, daß die Abgase der Rekuperatorbrenner über Dampfstrahlinjektoren abgezogen werden und daß das aus den Dampfstrahlinjektoren austretende Abgas-Dampf-Gemisch einem Abhitzekessel zur Erzeugung von Wasserdampf zugeführt wird, wobei der im Abhitzekessel erzeugte Wasserdampf zum Antrieb der Dampfstrahlinjektoren dient.

2.  Verfahren nach Anspruch 1, dadurch gekennzeichnet, daß das aus dem Abhitzekessel austretende Abgas-Dampf-Gemisch durch einen Kondensatabscheider geleitet und dort vom zufließenden Frischwasser gekühlt wird.

3.  Verfahren nach Anspruch 1 oder 2, dadurch gekennzeichnet, daß bei Anwendung einer dampferzeugenden Wasserkühlung für heißgehende Teile des Industrieofens der durch die Wasserkühlung entstehende Dampf ebenfalls in den Abhitzekessel geleitet wird.

0098489

4. Verfahren nach Anspruch 3, dadurch gekennzeichnet, daß der im Abhitzekessel erzeugte Wasserdampf in einer Turbine entspannt wird, bevor er zum Antrieb der Dampfstrahlinjektoren dient.

5. Verfahren nach Anspruch 4, dadurch gekennzeichnet, daß die Dampfturbine einen Generator antreibt, der den Strom für ein die Rekuperatorbrenner beaufschlagendes Gebläse liefert.

6. Verfahren nach einem der Ansprüche 1 bis 5, dadurch gekennzeichnet, daß der Abhitzekessel während der Anfahrphase des Industrieofens durch eine Zusatzheizung beheizt wird.

FIG.1

# FIG. 2

<table>
<tr><td colspan="4" align="center">**EINSCHLÄGIGE DOKUMENTE**</td><td></td></tr>
</table>

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | FR-A-2 353 709 (COMPAGNIE FRANCAISE D'EDUTES ET DE CONSTRUCTION) * Seite 1, Zeilen 8-31; Ansprüche 1,14; Figur * | 1 | F 27 D 7/02 F 27 D 17/00 F 23 L 17/16 |
| Y | DE-A-3 018 368 (VOEST-ALPINE AG.) * Ansprüche 1,4,5 * | 1 | |
| A | FR-A- 428 560 (SAUER) * Zusammenfassung; Figuren * | 1,2 | |
| A | DE-B-1 162 391 (SCHMIDT'SCHE HEISSDAMPF-GESELLSCHAFT) * Spalte 5, Zeilen 15-27; Figuren; Anspruch 1 * | 3 | |
| A | FR-A-1 380 735 (GEFRROY) * Zusammenfassung, Nr. 1,7; Figuren * | 4,5 | RECHERCHIERTE SACHGEBIETE (Int. Cl. 3) F 27 D F 28 D F 23 L F 01 K C 21 D |

Der vorliegende Recherchenbericht wurde für alle Patentansprüche erstellt.

| Recherchenort | Abschlußdatum der Recherche | Prüfer |
|---|---|---|
| DEN HAAG | 10-10-1983 | COULOMB J.C. |